Europäisches Patentamt

European Patent Office

Office européen des brevets

(11) Numéro de publication: **0 312 449 B1**

# FASCICULE DE BREVET EUROPEEN

(45) Date de publication de fascicule du brevet: **05.05.93**  (51) Int. Cl.5: **H04N 5/14**, G08B 13/18

(21) Numéro de dépôt: **88402573.5**

(22) Date de dépôt: **11.10.88**

(54) **Dispositif de contrôle de présence d'informations d'images dans des signaux vidéo.**

(30) Priorité: **14.10.87 FR 8714192**

(43) Date de publication de la demande:
**19.04.89 Bulletin 89/16**

(45) Mention de la délivrance du brevet:
**05.05.93 Bulletin 93/18**

(84) Etats contractants désignés:
**DE GB IT NL**

(56) Documents cités:
**GB-A- 1 582 936**

**ELECTRONIC AND RADIO ENGINEERING,
pages 621-622, Plenum Publishing Corporation, New York, US; V.I. VENGLYUK:
"Television-line selector"**

**PROCEEDINGS OF THE 1979 CARNAHAN
CONFERENCE ON CRIME COUNTERMEASU-
RES, Lexington, Kentucky, 16-18 mai 1979,
éditeur J.S. JACKSON, pages 127-132; L.C.
HOWINGTON: "A microcomputer-based video motion detection system"**

(73) Titulaire: **Gay, Gérard Jean
5 Parvis du Breuil App. 41
F- 92160 Antony(FR)**

(72) Inventeur: **Gay, Gérard Jean
5 Parvis du Breuil App. 41
F- 92160 Antony(FR)**

(74) Mandataire: **Mongrédien, André et al
c/o BREVATOME 25, rue de Ponthieu
F- 75008 Paris (FR)**

Rank Xerox (UK) Business Services
(3.10/3.6/3.3.1)

## Description

La présente invention concerne un dispositif de contrôle de présence d'informations d'images dans des signaux vidéo applicables à un récepteur vidéo à écran d'affichage par balayage de lignes, notamment à deux trames entrelacées.

Cette invention peut s'appliquer à la détection d'informations relatives à la présence d'une mire dans des signaux vidéo reçus par un récepteur, à la surveillance de l'accès de locaux, au déclenchement de dispositifs de taxation d'un récepteur vidéo, dès réception d'une image, à l'émission d'une alarme lorsqu'un signal vidéo présente un niveau de bruit important, etc...

On connaît des dispositifs de contrôle de présence d'informations d'images dans des signaux vidéo applicables à un récepteur vidéo à écran d'affichage. Ces dispositifs connus comportent généralement une mémoire dans laquelle sont enregistrées des informations d'images de référence, correspondant aux images que le récepteur est susceptible de recevoir. Lorsque les signaux vidéo sont reçus par ce récepteur, les informations d'images de référence sont comparées aux informations d'images présentes dans les signaux vidéo reçus par le récepteur, de manière à déclencher une alarme lorsque la concordance n'est pas obtenue (voir l'article de L.C.HOWINGTON " A micro computer − based video motion detection system" publié dans les "PROCEEDINGS OF THE 1979 CARNAHAN CONFERENCE ON CRIME COUN − TERMEASURES", 16 − 18 mai 1979, Lexington, Kentucky, pages 127 à 132).

Dans ces dispositifs, les informations enregistrées concernent toutes les lignes de balayage de l'écran, pour les deux trames entrelacées, qui permettent généralement d'afficher une image.

Ces dispositifs de type connu sont très coûteux et peu performants puisqu'ils nécessitent tout d'abord l'enregistrement des informations d'images de référence, pour la totalité des lignes de balayage de l'écran, pour les deux trames nécessaires à la reconstitution de chaque image ; ces dispositifs nécessitent ensuite une comparaison ligne par ligne de la totalité des informations d'images dans les signaux vidéo reçus, avec la totalité des informations d'images de référence. Il en résulte que ces dispositifs nécessitent des mémoires ayant des capacités importantes et des temps de traitement très longs qui rendent ces dispositifs couteux et inutilisables en temps réel.

De plus, ils ne permettent pas de détecter en temps réel, l'absence de signal vidéo, notamment lorsque le niveau d'amplitude de signaux vidéo transmis vers un récepteur est inférieur à un seuil de réception.

L'invention a pour but de remédier à ces inconvénients et notamment de réaliser un dispositif de contrôle rapide de présence d'informations d'images dans des signaux vidéo, qui agit en temps réel, sans qu'il soit nécessaire d'enregistrer et de contrôler toutes les informations d'images contenues dans toutes les lignes nécessaires à l'affichage d'une image sur un écran. Le dispositif de l'invention permet aussi de déclencher une alarme en cas d'interruption de la transmission de signaux vidéo appliqués à un récepteur.

Ces buts sont atteints, comme on le verra plus loin en détail, notamment grace à un contrôle d'un nombre très restreint d'informations d'images dans des signaux vidéo, ce contrôle étant uniquement effectué pour un nombre très restreint d'informations relatives à une courte portion d'une seule ligne d'une image. La ligne et la portion de ligne, sont choisies de façon prédéterminée pour ce contrôle.

L'invention a pour objet un dispositif de contrôle de présence d'informations d'images dans des signaux vidéo applicables à un récepteur vidéo à écran d'affichage par balayage de lignes à deux trames entrelacées, caractérisé par le fait qu'il comporte des moyens de détection de lignes recevant le signal vidéo sur une entrée, pour repérer un instant, caractéristique de début de balayage d'une ligne de rang prédéterminé par rapport à une première ligne d'une image, et pour fournir sur une sortie un signal logique de sélection de ligne, caractéristique de cet instant prédéterminé, des moyens de découpage de ligne, reliés à la sortie des moyens de détection, pour sélectionner à partir de l'instant caractéristique deux instants successifs séparés par un intervalle de temps de découpage au cours duquel une portion prédéterminée de ligne est balayée, ces moyens de découpage fournissant sur une sortie un signal logique de découpage représentatif de l'intervalle de temps de découpage de la ligne de rang prédéterminé, des moyens de comparaison recevant le signal vidéo sur une entrée et recevant sur une autre entrée une tension de référence de transition entre deux niveaux d'amplitudes de luminance d'image, pour comparer les variations d'amplitude du signal vidéo avec la tension de référence et pour fournir sur une sortie un signal caractéristique des transitions entre deux niveaux de luminance, pour des parties du signal vidéo qui sont susceptibles de contenir des informations d'images, des moyens de mise en forme reliés à la sortie des moyens de comparaison, pour fournir sur une sortie un signal logique, caractéristique des transitions, et des moyens programmables de comptage de transitions reliés à la sortie des moyens de découpage et à la sortie des moyens de mise en forme, pour compter le nombre de transitions dans ladite portion de ligne de rang prédéterminé, une sortie de ce compteur étant reliée à des moyens d'alarme déclenchés lorsque le nombre de transitions dépasse un compte programmé prédéterminé.

Selon une autre caractéristique de l'invention, les moyens de détection de ligne de rang prédéterminé comportent des moyens d'extraction recevant ledit signal vidéo pour en extraire des impulsions de synchronisation de lignes et d'images, ces impulsions étant respectivement disponibles sur des sorties des moyens d'extraction, un compteur-décompteur à compte programmable relié aux sorties des moyens d'extraction qui fournissent les impulsions de synchronisation de lignes et d'images, compteur-décompteur fournissant ledit signal logique de sélection de ligne sur une sortie, lorsque le rang de la ligne de rang prédéterminé correspond à un compte programmé, les moyens de découpage de ligne comportant un oscillateur à tension contrôlée relié à la sortie des moyens d'extraction qui fournit les impulsions de synchonisation de lignes, cet oscillateur fournissant sur une sortie des impulsions de découpage de lignes synchronisées avec les impulsions de synchronisation de lignes et ayant une fréquence multiple de la fréquence des impulsions de synchronisation de ligne, et un compteur différentiel programmable relié à la sortie de l'oscillateur pour fournir sur une sortie un signal logique de découpage de ligne, le compteur différentiel étant programmé pour que les impulsions de découpage comptées correspondent à une durée égale audit intervalle de temps de découpage, et une porte logique de type ET reliée à la sortie du compteur différentiel et à la sortie des moyens d'extraction, pour fournir sur une sortie le signal logique de découpage de la ligne de rang prédéterminé.

Selon une autre caractéristique, les moyens programmables de comptage de transitions comportent une porte logique de type ET de comptage reliée par une entrée à la sortie de la porte ET des moyens de découpage, et reliée par une autre entrée à la sortie des moyens de mise en forme, cette porte de comptage fournissant sur une sortie, pendant ledit intervalle de temps de découpage de la ligne de rang prédéterminé, ledit signal caractéristique des transitions, et un compteur-décompteur d'alarme à compte programmable fournissant sur une sortie un signal logique d'alarme, dès qu'un nombre programmé de transition est atteint.

Selon une autre caractéristique, la sortie du compteur-décompteur d'alarme est reliée à une mémoire pour enregistrer les signaux logiques d'alarme, susceptibles d'être fournis par le compteur-décompteur d'alarme pour des images successives, l'alarme n'étant déclenchée par un signal de sortie de la mémoire que lorsqu'un nombre prédéterminé de signaux logiques d'alarme a été enregistré.

Selon une autre caractéristique, les moyens d'extraction fournissent sur une autre sortie des impulsions de clampage, les moyens de comparaison comprenant un circuit de clampage relié par une première entrée à la sortie des moyens d'extraction pour recevoir lesdites impulsions de clampage, une deuxième entrée du circuit de clampage étant reliée à un potentiel de référence, correspondant dans le signal vidéo au niveau de tension de la couleur noire de l'image, une troisième entrée du circuit de clampage recevant le signal vidéo, ce cicuit de clampage fournissant sur une sortie, un signal vidéo dont le niveau de tension est référencé à la couleur noire, et un comparateur relié par une entrée à la sortie du circuit de clampage, et relié par une autre entrée à un potentiel correspondant dans le signal vidéo à un niveau de tension situé entre les niveaux respectifs de tension des couleurs noire et blanche, ce comparateur fournissant sur une sortie ledit signal caractéristique des transitions.

Selon une autre caractéristique, les moyens d'extraction fournissant sur une autre sortie des impulsions de synchronisation de trame, le dispositif comporte en outre des moyens monostables reliés à cette sortie pour recevoir les impulsions de synchronisation de trame, ces moyens monostables fournissant sur une sortie un signal de déclenchement d'alarme lorsqu'aucune impulsion de trame n'est reçue ou que ces impulsions présentent une amplitude insuffisante.

Les caractéristiques et avantages de l'invention ressortiront mieux de la description qui va suivre, donnée en référence aux dessins annexés dans lesquels :

- la figure 1 représente schématiquement un dispositif de controle de présence d'informations d'images dans des signaux vidéo, conforme à l'invention,
- la figure 2 est un chronogramme des signaux essentiels intervenant dans le dispositif de l'invention.

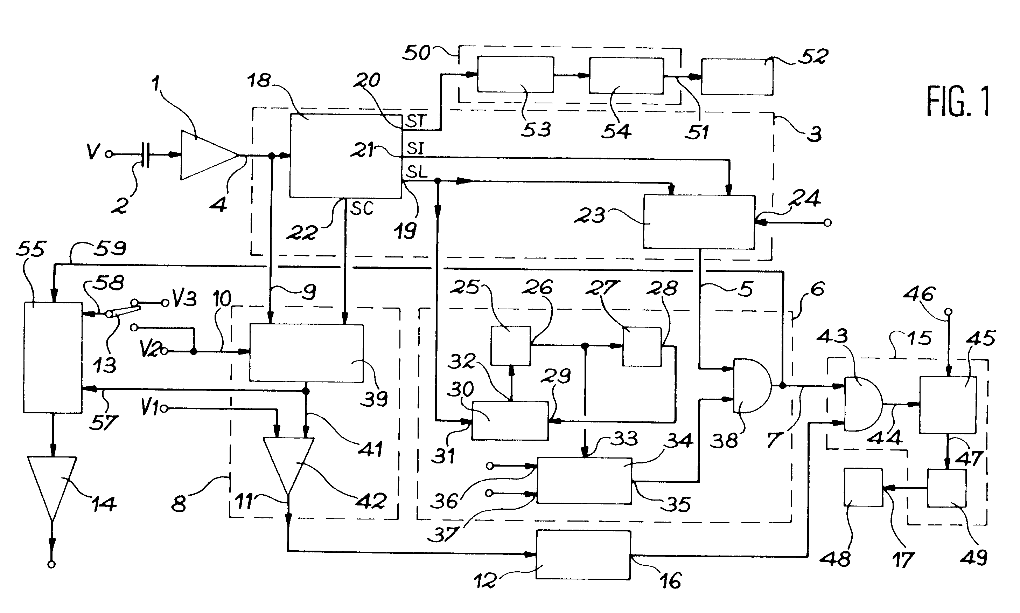

La figure 1 représente schématiquement un dispositif de contrôle conforme à l'invention. Ce dispositif permet de contrôler la présence d'informations d'images dans des signaux vidéo applicables à un récepteur vidéo à écran d'affichage par balayage de lignes, par exemple à deux trames entrelacées, non représentées sur la figure. On suppose que ces signaux sont appliqués au dispositif ainsi qu'au récepteur (non représenté sur la figure), par l'intermédiaire d'un amplificateur 1 dont l'entrée reçoit des signaux vidéo V à travers un condensateur de découplage 2.

Le dispositif comporte des moyens 3 de détection de lignes de balayage. Ces moyens de détection reçoivent le signal vidéo sur une entrée 4. Ils permettent de repérer un instant caractéristique de début de balayage d'une ligne de rang prédéterminé, par rapport à une première ligne d'une trame, et notamment par rapport à la première ligne de la première trame de chaque image, comme on le verra plus loin en détail.

Les moyens de détection de lignes 3 fournissent sur une sortie 5 un signal logique de sélection de ligne, caractéristique de l'instant prédéterminé du début et de la durée de balayage d'une ligne de rang prédéterminé ; ce rang est repéré par rapport à la première ligne de la première trame, lorsque le balayage est à deux trames entrelacées.

Le dispositif comporte aussi des moyens 6 de découpage de ligne reliés à la sortie 5 des moyens de détection. Ces moyens de découpage permettent de sélectionner à partir de l'instant caractéristique et durant le balayage d'une ligne, deux instants successifs séparés par un intervalle de temps de découpage, au cours duquel une portion prédéterminée de ligne est balayée.

C'est ainsi que pour un récepteur vidéo pour lequel le balayage comporte 625 lignes à deux trames entrelacées, les moyens de détection 3 permettent, comme on le verra plus loin en détail, de sélectionner par exemple la ligne de rang 155 de la première trame ; les moyens de découpage 6 permettent au cours du balayage de la ligne de rang 155, de sélectionner les informations d'images contenues dans le signal vidéo au cours du balayage de cette ligne, entre deux instants t1, t2. Ces informations sont relatives à des variations d'amplitude du signal vidéo, caractéristiques de transitions de luminance dans l'image. Les moyens de découpage 6 permettent en fait de déterminer une portion prédéterminée d'une ligne de rang prédéterminé. Ils fournissent sur une sortie 7, un signal logique de découpage, représentatif de l'intervalle de temps t1 – t2 de découpage de la ligne prédéterminée, comme on le verra plus loin en détail.

Le dispositif comporte aussi des moyens de comparaison 8 recevant sur une entrée 9, le signal vidéo présent à la sortie 4 de l'amplificateur 1. Une tension de référence V2 qui est par exemple, comme on le verra plus loin en détail, le niveau de référence de potentiel de la couleur noire dans une image, est appliquée sur une autre entrée 10 des moyens de comparaison 8. Les moyens de comparaison 8 fournissent sur une sortie 11, un signal caractéristique des transitions entre deux couleurs (par exemple entre le noir et le blanc dans une image), pour des parties du signal vidéo qui sont susceptibles de contenir des informations d'images. En fait, les moyens de comparaison 8 permettent de restituer le niveau de référence de potentiel du signal vidéo, ce niveau ayant disparu par suite de la présence du condensateur 2 d'entrée.

Le dispositif comprend aussi des moyens de mise en forme 12 des signaux de transition fournis par les moyens de comparaison 8 ; ces signaux de transition sont ainsi transformés en des signaux à deux états logiques, caractéristiques des transitions de couleurs.

Le dispositif comporte aussi des moyens 55 d'aide à l'exploitation, recevant sur une entrée 57 le signal vidéo référencé (clampé), provenant des moyens 8 de comparaison, et recevant sur une entrée 58, une tension de référence V2 (correspondant à la couleur noire), ou une tension de référence V3 (correspondant à la couleur blanche). La sélection de cette tension de référence est effectuée à l'aide d'un commutateur 13. Les moyens 55 reçoivent également sur une entrée 59, le signal logique de découpage de la ligne prédéterminée, représentatif de l'intervalle de temps t1 – t2, fourni par les moyens de découpage 6. Les moyens 55 fournissent sur une sortie, un signal qui est appliqué à un amplificateur. Ce signal amplifié à la sortie de l'amplificateur peut être appliqué à un récepteur vidéo, sur l'écran duquel apparaît alors un segment de couleur noire ou blanche (selon la sélection effectuée par le commutateur 13), à l'emplacement représentant l'intervalle de temps t1 – t2 de découpage de la ligne de rang prédéterminé.

Les moyens 55 peuvent être constitués par un circuit fonctionnant en commutation.

Enfin, le dispositif comprend des moyens programmables 15 de comptage de transitions reliés à la sortie 7 des moyens de découpage 6, et à la sortie 16 des moyens de mise en forme 12. Ces moyens programmables de comptage permettent de compter le nombre de transitions caractéristiques dans la portion sélectionnée par découpage de la ligne de rang prédéterminé. Les moyens de comptage 15 sont reliés par une sortie 17, à des moyens d'alarme 48 qui sont déclenchés lorsque le nombre de transitions dans la portion de ligne de rang prédéterminé dépasse un compte programmé prédéterminé.

Les moyens de découpage fournissent sur la sortie 7 un signal logique de découpage d'une ligne de rang prédéterminée, entre deux instants prédéterminés t1 et t2. Ce signal est appliqué aux moyens programmables 15 de comptage qui reçoivent en outre entre ces instants, des signaux caractéristiques des transitions de couleurs pour la ligne de rang prédéterminé, dont le balayage est en cours. Les moyens de comptage 15 comptent donc les transitions caractéristiques de couleurs de la ligne de rang prédéterminé, pendant l'intervalle de temps (t2 − t1) présélectionné par les moyens de découpage 6. Il en résulte que l'alarme 17 peut être déclenchée lorsque le nombre de transitions compté par les moyens 15 dépasse un compte programmé prédéterminé. Dans le cas par exemple où le dispositif est utilisé comme dispositif de surveillance dans un local, l'image fournie par une caméra pointée vers ce local ne doit pas varier, sauf si un intrus pénétre dans ce local. Pour dé − tecter cette intrusion, on choisit une portion de ligne de rang prédéterminé, caractéristique de l'image, pour laquelle la pénétration de l'intrus dans le local, modifie le nombre de transitions compté pour cette portion de ligne.

Contrairement aux dispositifs connus, le dis − positif de l'invention agit donc en temps réel, puisque dans l'état de la technique, il est néces − saire d'effectuer un contrôle pour l'ensemble des lignes de balayage d'une image.

Les moyens 3 de détection de ligne compor − tent des moyens d'extraction 18. Ces moyens re − çoivent le signal vidéo fourni par l'amplificateur 1, ce signal étant dépourvu de son niveau de poten − tiel de référence (correspondant par exemple à la couleur noire dans une image). Ces moyens d'ex − traction fournissent respectivement, sur des sorties 19, 20, 21, 22, des impulsions de synchronisation de ligne SL, de trame ST, d'image SI, ainsi que des impulsions de synchronisation de verrouillage SC, plus connues sous le nom d'impulsions de "CLAMP". Ce circuit d'extraction n'est pas décrit ici en détail car il est bien connu dans l'état de la technique et est utilisé dans tous les récepteurs vidéo. Les impulsions de "CLAMP" SC sont, dans tout signal vidéo, produites à la même fréquence que les impulsions de synchronisation de ligne et permettent de reconstituer, grâce à un circuit connu dans l'état de la technique, le niveau de référence de tension d'un signal vidéo, ce niveau correspondant à la couleur noire dans une image que permet d'obtenir le signal vidéo.

Les moyens de détection comportent aussi un compteur − décompteur 23, à compte program − mable, relié aux sorties 19, 20 des moyens d'ex − traction 18, pour recevoir les impulsions de synchronisation de ligne SL et d'image SI. Le compteur − décompteur 23 fournit sur sa sortie 5 le signal logique de sélection de ligne, lorsque le rang de la ligne prédéterminée correspond à un compte programmé. Ce compte peut être appliqué sous forme d'un signal approprié, sur une entrée 24 du compteur 23. C'est ainsi qu'il est possible de sé − lectionner par exemple la ligne de rang 155. Le compteur étant chargé à la valeur numérique 155, le décomptage commence lorsque ce compteur reçoit la première impulsion de synchronisation ligne SL, correspondant à la ligne de rang 1. Cette impulsion SL pour la ligne de rang 1 est fournie immédiatement après l'impulsion de synchronisa − tion d'image SI. Le compteur va ainsi décompter 155 impulsions de synchronisation de ligne et fournir à la fin de ce décomptage, sur sa sortie 5, un signal logique indiquant que la ligne sélection − née est en cours de balayage. Ce signal logique qui était par exemple de niveau 0 au cours du balayage des lignes de rang 1 à 144 passe au niveau 1 au début du balayage de la ligne de rang 155 et reste à ce niveau pendant toute la durée de ce balayage. Ce signal repasse ensuite au niveau logique 0, à la fin du balayage de cette ligne.

Les moyens 6 de découpage de ligne com − portent un oscillateur 25 à tension contrôlée, four − nie par une sortie 32 d'un comparateur 30. Cet oscillateur fournit sur une sortie 26, des impulsions de découpage de ligne, synchronisées avec les impulsions de synchronisation de ligne SL et ayant une fréquence multiple de la fréquence de ces impulsions SL. C'est ainsi par exemple, que si la fréquence des impulsions de synchronisation de ligne est égale à 15 625 Hertz, l'oscillateur fournit sur sa sortie 26, des impulsions dont la fréquence est égale à 15 625x64 = 1 mégahertz. La sortie 26 de l'oscillateur 25 est reliée à un diviseur de fré − quence 27 qui divise la fréquence des impulsions fournies par l'oscillateur par 64. La sortie 28 du diviseur de fréquence 27 est reliée à une entrée 29 d'un comparateur de phases 30, dont une autre entrée 31 est reliée à la sortie 19 des moyens d'extraction 18 pour recevoir les impulsions SL de synchronisation de ligne. Le comparateur de phase 30 reçoit donc sur chacune de ses entrées, des impulsions ayant une même fréquence égale à 15 625 Hertz ; il fournit sur une sortie 32, une tension d'erreur qui permet de contrôler la frequence de l'oscillateur 25. Il en résulte que la sortie 26 de l'oscillateur 25 fournit des impulsions à une fré − quence de 1 mégahertz parfaitement synchroni − sées avec les impulsions de synchronisation de ligne. 64 impulsions d'oscillateur sont ainsi fournies entre deux impulsions SL de synchronisation de ligne, dans l'exemple considéré.

Ces impulsions fournies par l'oscillateur sont aussi appliquées à une entrée 33 d'un compteur différentiel programmable 34. Le compteur diffé − rentiel 34 fournit sur une sortie 35 un signal logique de découpage de ligne. Ce signal est par exemple de niveau 1 pendant l'intervalle de temps t2 − t1 de découpage choisi dans le balayage de chaque ligne, et de niveau logique 0 en dehors de cet intervalle de temps. En fait, le compteur est pro − grammé par des signaux appliqués sur ses entrées 36, 37, et correspondant respectivement à deux valeurs numériques. La première de ces valeurs représente le nombre d'impulsions de l'oscillateur que ce compteur doit dénombrer à partir du début de balayage d'une ligne et jusqu'à ce que son signal de sortie passe de l'état logique 0 à l'état logique 1. Ce premier comptage correspond en fait à la durée t1 − t0 (t0 étant l'instant de début de balayage d'une ligne). La deuxième valeur numérique représente le nombre d'impulsions que ce compteur doit dénombrer avant que son signal de sortie passe de nouveau à l'état logique 0, à l'instant t2. La durée t2 − t1 de maintien du signal de sortie du compteur 35 à l'état logique 1 correspond en fait à l'intervalle de temps prédéterminé de découpage d'une ligne, au cours duquel on souhaite vérifier, pour une ligne de rang prédéterminé, le nombre de transitions caractéristiques de luminance.

La sortie 35 du compteur différentiel 34 est reliée à une entrée d'une porte ET 38, dont une autre entrée est reliée à la sortie 5 du compteur-décompteur de ligne 23 des moyens de détection 3.

La sortie 7 de la porte ET 38 fournit donc un signal logique de découpage de la ligne de rang prédéterminé. Dans l'exemple considéré, ce signal logique est fourni pendant l'intervalle de temps prédéterminé (t2 − t1), au cours du balayage de la ligne de rang 155. Ce signal présente par exemple le niveau 1 pendant tout cet intervalle de temps, et le niveau 0 en dehors de cet intervalle de temps, pendant le balayage de la ligne de rang 155.

Les moyens 8 de comparaison comprennent un circuit de "clampage" 39 (en anglais "CLAMPING CIRCUIT"), connu dans l'état de la technique et qui ne sera pas décrit ici en détail. Ce circuit 39 reçoit les signaux vidéo fournis sur la sortie 4 de l'amplificateur 1, dépourvus de leur niveau de tension de référence de couleur ; il reçoit aussi les impulsions de "CLAMP" SC fournies par la sortie 22 des moyens d'extraction 18. L'entrée 10 du circuit de clampage 39, correspond à l'entrée des moyens de comparaison à laquelle est appliqué un potentiel V2 de référence de couleur (la couleur noire par exemple). Ce potentiel de référence peut être fixé à 0,5 volt ; il permet au circuit de clampage 39, de manière connue, de restituer son niveau de référence de couleur au signal vidéo reçu ; comme indiqué plus haut, ce signal vidéo est en effet dépourvu de ce niveau de référence, par suite de la présence du condensateur 2 à l'entrée de l'amplificateur 1.

Une sortie 41 du circuit de clampage 39 fournit donc un signal vidéo dont le niveau de référence de tension correspond à la couleur noire par exemple. Cette sortie est reliée à une entrée d'un comparateur 42. Une autre entrée de ce comparateur est portée au potentiel de référence V1 (0,7 volt par exemple) correspondant dans le signal vidéo, au niveau de tension compris entre la couleur noire (0,5V) et la couleur blanche (0,5V + 0,7V = 1,2V) par exemple. La sortie 13 du comparateur 42 fournit donc un signal dans lequel les transitions de luminance (amplitudes de tensions) par rapport au potentiel de référence V1, (entre la couleur noire et la couleur blanche) sont parfaitement détectables. Le potentiel de référence peut être choisi entre la couleur noire et la couleur blanche.

Ce signal est appliqué aux moyens de mise en forme 12 qui fournissent sur leur sortie 16, un signal représentant des niveaux logiques successifs 0 ou 1, représentatifs de ces transitions de luminance d'une image.

Les moyens programmables de comptage de transitions 15 comportent une porte logique de comptage 43, de type ET qui est reliée par une entrée, à la sortie 7 de la porte ET 38 des moyens de découpage. La porte 43 est reliée, par une autre entrée, à la sortie 16 des moyens de mise en forme 12. Cette porte fournit donc, sur une sortie 44, pendant l'intervalle de temps de découpage t2 − t1 de la ligne de rang prédéterminé, le signal caractéristique des transitions de luminance présentes dans le signal vidéo relatif à cette ligne, pendant cet intervalle de temps.

La sortie 44 de la porte de comptage 43 est reliée à une entrée d'un compteur décompteur d'alarme 45, à compte programmable. La valeur de ce compte peut être programmée, par exemple par un signal appliqué sur une entrée 46 du compteur-décompteur 45. Dès que le nombre programmé de transitions est atteint, un signal logique fourni sur une sortie 47 du compteur 45, passe d'un premier état logique à un deuxième état logique. Ce changement d'état logique peut provoquer le déclenchement d'une alarme 48.

Selon un autre mode de réalisation des moyens programmables de comptage de transitions 15, ceux-ci comprennent une mémoire 49 permettant d'enregistrer les signaux logiques d'alarme fournis par le compteur 45, pour plusieurs images successives, de manière à ne déclencher l'alarme 48 que lorsqu'un nombre prédéterminé de signaux logiques d'alarme a été enregistré dans la mémoire 49.

Enfin, le dispositif comporte des moyens monostables 50 reliés à la sortie 20 des moyens d'extraction 18, pour recevoir des impulsions ST de synchronisation de trame. Ces moyens monostables fournissent sur une sortie 51, un signal de déclenchement d'une alarme 52, lorsqu'aucune impulsion de trame n'est reçue pendant un intervalle de temps prédéterminé.

Les moyens monostables 50 comprennent une première bascule monostable 53 dont le temps de conduction est légèrement inférieur à la période qui sépare deux impulsions successives de synchronisation de trame. Ce temps peut être, dans l'exemple considéré, de 15 millisecondes, puisque les impulsions de synchronisation de trame sont séparées par une période de 20 millisecondes, pour un récepteur à 625 lignes et à deux trames entrelacées. Les moyens monostables 50 comportent aussi une deuxième bascule monostable 54 qui est reliée par une entrée, à une sortie de la première bascule 53. La deuxième bascule monostable 54 a une durée de conduction très supérieure à celle de la première bascule (1 seconde par exemple). Lors de la réception d'une impulsion de synchronisation de trame, la première bascule monostable présente sur sa sortie un signal logique qui passe du niveau 0 au niveau 1, cet état logique retombant au niveau 0 avant la réception de l'impulsion de synchronisation de trame suivante. Ce changement d'état logique du signal de sortie de la première bascule monostable provoque la conduction de la deuxième bascule monostable 54, dont le signal de sortie passe par exemple du niveau 0 au niveau 1. Ce niveau 1 sur la sortie de la bascule 54 empêche le déclenchement de l'alarme 52, pendant une durée bien supérieure à la période qui sépare deux impulsions de synchronisation de trame. Au-delà de cette durée (1 seconde par exemple) s'il n'y a plus d'impulsion de synchronisation de trame, et donc absence de signal vidéo ou signal vidéo de niveau inférieur à un seuil fixé, le signal de sortie de la première bascule monostable 53 ne change plus d'état et le signal de sortie de la deuxième bascule monostable passe au niveau logique 0, déclenchant ainsi l'alarme 52 qui indique ces anomalies.

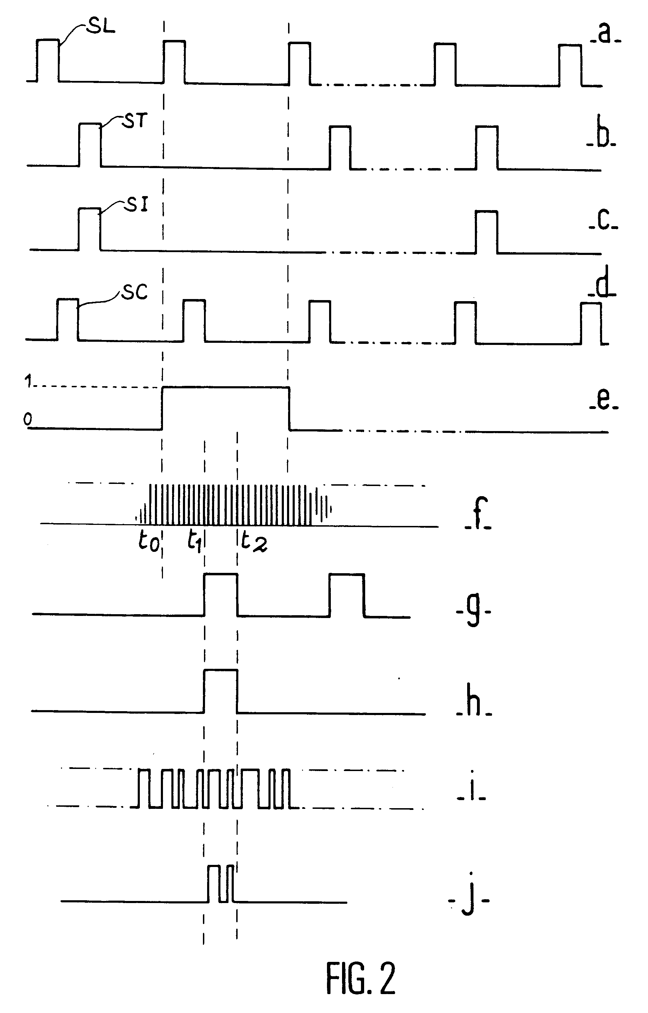

La figure 2 est un chronogramme des signaux essentiels intervenant dans le dispositif de l'invention. Ce chronogramme permet de mieux comprendre le fonctionnement de ce dispositif.

Le chronogramme a représente les impulsions SL de synchronisation de ligne, qui ont par exemple, une fréquence de 15 625 Hertz, pour un balayage à 625 lignes, à deux trames entrelacées. Ces impulsions SL sont disponibles sur la sortie 19 des moyens d'extraction 18.

Le chronogramme b représente les impulsions ST de synchronisation de trame, disponibles sur la sortie 20 des moyens d'extraction 18. Ces impulsions de synchronisation de trame présentent une fréquence de 50 hertz pour un balayage à 625 lignes à deux trames entrelacées.

Le chronogramme c représente les impulsions SI, de synchronisation d'image, disponibles sur la sortie 21 des moyens d'extraction 18. Ces impulsions ont une fréquence moitié de la fréquence des impulsions de synchronisation de trame ST.

Le chronogramme d représente les impulsions SC de "clamp", disponibles sur la sortie 22 des moyens d'extraction 18. Ces impulsions de clamp ont une fréquence égale à celle des impulsions de synchronisation de ligne SL.

Le chronogramme e représente le signal logique de sortie du compteur-décompteur 23, qui permet de repérer le balayage de la ligne prédéterminée. Dans l'exemple représenté sur cette figure, on suppose que l'on souhaite repérer par exemple la première ligne de la première trame. Le compteur-décompteur 23 est donc programmé à la valeur 1 .Ainsi, après la réception d'une première impulsion d'image SI, la première impulsion SL de synchronisation de ligne provoque le passage du niveau logique 0 au niveau logique 1 du signal de sortie du compteur 23. Ce signal reste au niveau logique 1 pendant toute la durée du balayage de la ligne de rang 1. Bien entendu un signal de même forme apparaîtrait, entre deux impulsions de synchronisation de ligne différentes, si une ligne de rang prédéterminé différent était choisie.

Le chronogramme f représente les impulsions de sortie de l'oscillateur 25. Ces impulsions sont appliquées au compteur différentiel 34. Ce compteur, au cours du balayage de chaque ligne, compte, selon les signaux de programmation qui sont appliqués sur les entrées 36, 37, le nombre d'impulsions fournies par l'oscillateur, entre le début t0 de balayage d'une ligne et un instant t1 à partir duquel on souhaite dénombrer le nombre de transitions caractéristiques de luminance dans une ligne de balayage. Ce compteur dénombre également le nombre d'impulsions fournies par l'oscillateur entre les instants t1 et t2 séparés par un intervalle de temps correspondant à la durée de découpage d'une ligne de balayage à partir de l'instant t1.

Le signal logique fourni par la sortie 35 du compteur 34, pour chaque ligne de balayage, est par exemple un signal de niveau logique 0 entre l'instant t0 de début du balayage de chaque ligne et l'instant t1 du début de découpage de ligne. Ce signal passe au niveau logique 1 à l'instant t1 de début de découpage de la ligne, puis retombe au niveau logique 0 à l'instant t2 de fin de découpage de la ligne. Le signal de sortie du compteur 35 est représenté sur le chronogramme g.

Le chronogramme h représente le signal logique de sortie de la porte 38. Cette porte fournit sur sa sortie un signal comparable à celui qui est fourni sur la sortie du compteur différentiel 34, mais seulement pendant le balayage de la ligne de rang prédéterminé sélectionné grâce au signal de sortie du compteur 23. Le signal logique de découpage, pour les autres lignes non sélectionnées, n'apparaît plus à la sortie de la porte 38.

La porte de comptage 43 reçoit sur une entrée, les signaux caractéristiques des transitions de luminance fournis par les moyens de mise en forme 12. Ces signaux sont représentés sur le diagramme i. Ils sont fournis en permanence par les moyens 12, pour toutes les lignes de balayage. La porte de comptage 43 reçoit d'autre part sur une autre entrée, le signal logique de découpage de la ligne prédéterminée, tel que représenté sur le diagramme h.

La sortie de la porte 43 fournit donc un signal, représenté en J, caractéristique des seules transitions de luminance qui interviennent dans le signal vidéo, pendant la durée de découpage t2 − t1 de la ligne de rang prédéterminé (de rang 1 par exemple ou de tout autre rang présélectionné), tel que représenté en J. C'est donc le nombre de ces transitions qui est compté par le compteur − décompteur 45 qui permet de déclencher l'alarme 48 lorsqu'un nombre prédéterminé de transitions est atteint. Ces transitions peuvent bien entendu être comptées, pour cette durée prédéterminée de découpage, et pour toutes les lignes de même rang, au cours des balayages des images successives.

La sortie 47 du compteur 45 fournit un signal logique caractéristique lorsque le compte prédéterminé de transitions est atteint. Dans un autre mode de réalisation, ce signal logique caractéristique peut être enregistré dans la mémoire 49, de manière à ne déclencher l'alarme 48 que lorsque le compte prédéterminé de transitions à ne pas dépasser a été atteint plusieurs fois, au cours de balayages de plusieurs images successives.

L'invention permet bien d'atteindre les buts mentionnés plus haut : pour la surveillance d'un local par exemple, on considère qu'il n'est plus nécessaire de contrôler, lors de l'apparition d'un intrus par exemple, les modifications qui interviennent éventuellement dans toutes les lignes de balayage d'une image, mais seulement les modifications qui interviennent dans les transitions caractéristiques de luminance, d'une seule ligne, et seulement pour une durée très limitée de balayage de cette ligne. De plus, le dispositif permet également de déclencher une alarme en cas d'absence de signal vidéo. Ceci est en effet très important dans les systèmes de sécurité, puisqu'il faut à tout instant être certain de la réception du signal vidéo.

Les moyens 50 de déclenchement d'alarme, qui sont de type monostable, peuvent de plus être des moyens à seuil de tension de déclenchement, permettant de déclencher l'alarme en cas de bruit de fond important à la réception du signal vidéo.

## Revendications

1. Dispositif de contrôle de présence d'informations d'images dans des signaux vidéo applicables à un récepteur vidéo à écran d'affichage par balayage de lignes à deux trames entrelacées, caractérisé par le fait qu'il comporte des moyens (3) de détection de lignes recevant le signal vidéo sur une entrée (4), pour repérer un instant (t0), caractéristique de début de balayage d'une ligne de rang prédéterminé par rapport à une première ligne d'une image, et pour fournir sur une sortie (5) un signal logique de sélection de ligne, caractéristique de cet instant prédéterminé, des moyens (6) de découpage de ligne, reliés à la sortie des moyens de détection, pour sélectionner à partir de l'instant caractéristique, deux instants successifs (t1, t2) séparés par un intervalle de temps de découpage (t2 − t1) au cours duquel une portion prédéterminée de ligne est balayée, ces moyens de découpage (6) fournissant sur une sortie (7) un signal logique de découpage représentatif de l'intervalle de temps de découpage de la ligne de rang prédéterminé, des moyens de comparaison (8) recevant le signal vidéo sur une entrée (9) et recevant sur une autre entrée une tension (V1) de référence de transition entre deux niveaux de luminance d'image, pour comparer les variations d'amplitude du signal vidéo avec la tension de référence, et pour fournir sur une sortie (11) un signal caractéristique des transitions entre deux niveaux de luminance, pour des parties du signal vidéo qui sont susceptibles de contenir des informations d'images, des moyens de mise en forme (12) reliés à la sortie des moyens de comparaison, pour fournir sur une sortie (16), un signal logique, caractéristique des transitions, et des moyens programmables de comptage de transitions (15) reliés à la sortie des moyens de découpage (6) et à la sortie des moyens de mise en forme (12), pour compter le nombre de transitions dans ladite portion de ligne de rang prédéterminé, une sortie de ce compteur étant reliée à des moyens d'alarme (48) déclenchés lorsque le nombre de transitions dépasse un compte programmé prédéterminé.

2. Dispositif selon la revendication 1, caractérisé en ce que les moyens (3) de détection de ligne de rang prédéterminé comportent des moyens d'extraction (18) recevant ledit signal vidéo sur une entrée (4) pour en extraire des impulsions de synchronisation de lignes (SL) et d'images (SI), ces impulsions étant respectivement disponibles sur des sorties (19, 21) des moyens d'extraction, un compteur − décompteur (23) à compte programmable relié aux sorties (19, 21) des moyens d'extraction qui fournissent les impulsions de synchronisation de lignes (SL) et d'images (SI), ce compteur − décompteur fournissant sur une sortie (5) ledit signal logique de sélection de ligne de rang prédéterminé, lorsque le rang prédéterminé de ligne correspond à un compte programmé, les moyens (6) de découpage de ligne comportant un oscillateur (25) à tension contrôlée relié à la sortie (19) des moyens d'extraction (18) qui fournit les impulsions de synchonisation de lignes (SL), cet oscillateur fournissant sur une sortie (26) des impulsions de découpage de lignes, synchronisées avec les impulsions (SL) de synchronisation de lignes et ayant une fréquence multiple de la fréquence des impulsions de synchronisation de ligne, et un compteur différentiel programmable (34) relié à la sortie (26) de l'oscillateur pour fournir sur une sortie (35), un signal logique de découpage de ligne, le compteur différentiel (34) étant programmé pour que les impulsions de découpage comptées, correspondent une durée égale audit intervalle de temps de découpage (t2−t1), et une porte logique (38) de type ET, reliée à la sortie du compteur différentiel (34) et à la sortie (5) des moyens d'extraction, pour fournir sur une sortie (7) le signal logique de découpage de la ligne de rang prédéterminé.

3. Dispositif selon la revendication 2, caractérisé en ce que les moyens programmables de comptage de transitions (15) comportent une porte logique (43) de type ET de comptage reliée par une entrée à la sortie (7) de la porte ET (38) des moyens de découpage (6), et reliée par une autre entrée à la sortie (16) des moyens de mise en forme, cette porte de comptage fournissant sur une sortie (44), pendant ledit intervalle de temps de découpage (t2−t1) de la ligne de rang prédéterminé, ledit signal caractéristique des transitions, et un compteur−décompteur d'alarme (45), à compte programmable, fournissant sur une sortie (47) un signal logique d'alarme, dès qu'un nombre programmé de transitions est atteint.

4. Dispositif selon la revendication 3, caractérisé en ce que la sortie du compteur−décompteur d'alarme (45) est reliée à une mémoire (49) pour enregistrer les signaux logiques d'alarme, susceptibles d'être fournis par le compteur−décompteur d'alarme pour des images successives, l'alarme n'étant déclenchée par un signal de sortie de la mémoire que lorsqu'un nombre prédéterminé de signaux logiques d'alarme a été enregistré.

5. Dispositif selon la revendication 3, caractérisé en ce que les moyens d'extraction (18) fournissent sur une autre sortie (22) des impulsions de clampage (SC), les moyens de comparaison (8) comprenant un circuit de clampage (39) relié par une première entrée à la sortie (22) des moyens d'extraction qui fournit lesdites impulsions de clampage, une deuxième entrée du circuit de clampage étant reliée à un potentiel de référence (V2), correspondant, dans le signal vidéo, au niveau de référence de tension de la couleur noire de l'image, une troisième entrée (9) du circuit de clampage (39) recevant le signal vidéo, ce circuit de clampage fournissant sur une sortie (41), un signal vidéo dont le niveau de tension est référencé à la couleur noire, et un comparateur (42) relié par une entrée à la sortie (41) du circuit de clampage, et relié par une autre entrée à la tension de référence (V1) correspondant, dans le signal vidéo, à un niveau de tension situé entre les niveaux correspondant respectivement aux couleurs noire et blanche, ce comparateur (42) fournissant sur une sortie (11) ledit signal caractéristique des transitions de luminance.

6. Dispositif selon la revendication 5, caractérisé en ce que les moyens d'extraction (18) fournissant sur une autre sortie (20) des impulsions (ST) de synchronisation de trame, le dispositif comportant en outre des moyens monostables (50) reliés à cette sortie (20) pour recevoir les impulsions de synchronisation de trame (ST), ces moyens monostables fournissant sur une sortie (51) un signal de déclenchement d'alarme lorsque aucune impulsion de trame n'est reçue ou que les impulsions de trame présentent une amplitude insuffisante.

7. Dispositif selon la revendication 5, caractérisé en ce qu'il comporte des moyens (55) de commutation, pour l'aide à l'exploitation, ces moyens étant reliés à la sortie des moyens de découpage (6) pour recevoir le signal logique de découpage de la ligne de rang prédéterminé, à la sortie du circuit de clampage (39) pour recevoir le signal vidéo à niveau de tension référencé à la couleur noire, et à un commutateur à deux positions pour relier les moyens de commutation (55), soit au potentiel (V2) de référence de la couleur noire, soit un potentiel (V3) de référence de la couleur blanche, les moyens de commutation fournissant sur une sortie un signal applicable à un récepteur vidéo à écran de contrôle, pour faire apparaître sur l'écran, pour la ligne de rang prédéterminé, un segment de couleur noire ou blanche selon la position du commutateur, à l'emplacement délimité sur cette ligne par l'intervalle de temps de découpage (t2−t1).

## Claims

1. Device for controlling the presence of image information in video signals applicable to a display screen video receiver by scanning of lines with two interlaced frames, characterized n that it comprises line detection means (3) receiving the video signal on an input (4) in order to mark an instant (t0) characteristic of the start of scanning a predetermined row line with respect to a first line of an image and in order to supply on an output (5) a logical line selection signal characteristic of this predetermined instant, line cutting means (6) connected to the output of the detection means in order to select from the characteristic instant two successive instants (t1 − t2) separated by a cutting time interval (t2 − t1) during which a predetermined line portion is scanned, these cutting means (6) supplying on one output (7) a logic cutting signal representative of the cutting time interval of the predetermined row line, comparison means (8) receiving the video signal on one input (9) and receiving on another input a transition reference voltage (V1) between two image luminance levels in order to compare the amplitude variations of the video signal with the reference voltage and in order to supply on one output (11) a signal characteristic of the transitions between two luminance levels for parts of the video signal which are likely to contain image information, transformation means (12) connected to the output of the comparison means in order to supply on one output (16) a logic signal characteristic of the transitions, and programmable transition counting means (15) connected to the output of the transformation means (12) in order to count the number of transitions in said predetermined row line portion, an output of this counter being connected to alarm means (48) triggered when the number of tansitions exceeds a predetermined programmed count.

2. Device according to claim 1, characterized in that the predetermined row line detection means (3) comprises extraction means (18) receiving said video signal on one input (4) so as to extract line (SL) and image (SI) synchronization pulses, these pulses being respectively available on outputs (19, 21) of the extraction means, a programmable count counter/reverse − counter (23) connected to the outputs (19, 21) of the extraction means which supply the line (SL) and image (SI) synchronization pulses, this counter/reverse − counter supplying on one output (5) said predetermined row line selection logic signal when the predetermined line row corresponds to a program count, the line cutting means (6) comprising a controlled voltage oscillator (25) connected to the output (19) of the extraction means (18) which supply the line synchronization pulses (SL), this oscillator supplying on one output (26) line cutting pulses synchronized with the line synchronization pulses (SL) and having a multiple frequency of the frequency of the line synchronization pulses, and a programmable differential counter (34) connected to the output (26) of the oscillator in order to supply on one output (35) a logic line cutting signal, the differential counter (34) being programmed so that the counted cutting pulses correspond to a period equal to said cutting time interval (t2 − t1), and a logic AND type gate (38) connected to the output of the differential counter (34) and to the output (5) of the extraction means in order to supply on one output (7) the logical cutting signal of the predetermined row line.

3. Device according to claim 2, characterized in that the programmable transition counting means (15) comprise an AND type logic counting gate (43) connected by one input to the output (7) of the AND gate (38) of the cutting means (6) and connected by another input to the output (16) of the transformation means, this counting gate supplying on one output (44), during said cutting time interval (t2 − t1) of the predetermined row line, said signal characteristic of the transitions, and a programmable count counter/reverse − counter (45) supplying on one output (47) a logic alarm signal as soon as a programmed number of transitions is reached.

4. Device according to claim 3, characterized in that the output of the alarm counter/reverse − counter (45) is connected to a memory (49) in order to record the logical alarm signals likely to be supplied by the alarm counter/reverse − counter for successive images, the alarm only being triggered by an output signal of the memory when a predetermined number of logic alarm signals has been recorded.

5. Device according to claim 3, characterized in that the extraction means (18) supply on another output (22) clamping pulses (SC), the comparison means (8) comprising a clamping circuit (39) connected by a first input to the output (22) of the extraction means which supply said clamping pulses, a second input of the clamping circuit being connected to a reference potential (V2) corresponding in the video signal to the voltage reference level of the black colour of the image, a third input (9) of the clamping circuit (39) receiving the video signal, this clamping circuit supplying on one output (41) a video signal whose voltage level is referenced to the colour black, and a com‑parator (42) connected by one input to the output (41) of the clamping circuit and con‑nected by another input to the reference volt‑age (V1) corresponding in the video signal to a voltage level situated between the levels re‑spectively corresponding to the colours black and white, this comparator (42) supplying on one output (11) said signal characteristic of the luminance transitions.

6. Device according to claim 5, characterized in that the extraction means (18) supply on an‑other output (20) frame synchronization pulses (ST), the device also comprising monostable means (50) connected to this output (20) in order to receive the frame synchronization pulses (ST), these monostable means sup‑plying on one output (51) an alarm triggering signal when no frame pulse is received or when the frame pulses have insufficient am‑plitude.

7. Device according to claim 5, characterized in that it comprises switching means (55) to as‑sist operation, these means being connected to the output of the cutting means (6) in order to receive the logical cutting signal of the pre‑determined row line, to the output of the clamping circuit (39) in order to receive the video signal with a level of voltage referenced to the colour black, and to a two‑position switch in order to connect the switching means (55), either to the potential (V2) referring to the colour black or to a potential (V3) referring to the colour white, the switching means sup‑plying on one output a signal applicable to a control screen video receiver in order to have appear on the screen for the predetermined row line a white or black segment, depending on the position of the switch, at the location delimited on this line by the cutting time in‑terval (t2 − t1).

**Patentansprüche**

1. Vorrichtung zur Kontrolle der Bildiformations‑Anwesenheit in Videosignalen, die auf einen Videoempfänger mit zwei veschränkte Teilbil‑der zeilenaustastendem Anzeigeschirm an‑wendbar sind, dadurch **gekennzeichnet,** daß sie Mittel (3) zur Zeilendetektion umfaßt, die das Videosignal über einen Eingang (4) empfangen, um einen Zeitpunkt (t0) zu bestimmen, der den Beginn des Austastens einer Zeile vorbestimmten Rangs bezüglich einer ersten Bildzeile kennzeichnet, und um über einen Ausgang (5) ein logisches Zeilenauswahlsignal zu liefern, das diesen Zeitpunkt kennzeichnet, sowie Mittel (6) zum Zeilenausschneiden, die mit dem Ausgang der Detektionsmittel ver‑bunden sind, um vom kennzeichnenden Zeit‑punkt ausgehend zwei aufeinanderfolgende Zeitpunkte (t1,t2) auszuwählen, die durch ein Ausschnitts‑Zeitintervall (t2 − t1) getrennt sind, während dessen ein vorbestimmter Teil der Zeile ausgetastet wird, wobei diese Aus‑schneidemittel (6) über einen Ausgang (7) ein logisches Ausschneidesignal liefern, das das Ausschnitts‑Zeitintervall der Zeile vorbe‑stimmten Rangs darstellt, Vergleichsmittel (8), die das Videosignal über einen Eingang (9) empfangen und an die über einen anderen Eingang eine Übergangs‑Referenzspannung (V1) zwischen zwei Leuchtdichteniveaus des Bildes gelegt ist, um die Amplitudenverände‑rungen des Videosignals mit der Referenz‑spannung zu vergleichen, und um über einen Ausgang (11) für Teile des Videosignal, die Bildinformationen enthalten können, ein die Ubergänge zwischen zwei Leuchtdichteniveaus kennzeichnendes Signal zu liefern, Formungsmittel(12), die mit dem Ausgang der Vergleichsmittel verbunden sind, um über ei‑nen Ausgang (16) ein logisches Signal zu lie‑fern, das die Übergänge kennzeichnet, und programmierbare Übergangs‑Zählmittel (15), die mit dem Ausgang der Ausschneide‑mittel (6) und dem Ausgang der Formungs‑mittel (12) verbunden sind, um die Zahl der Übergänge im besagten Teil der Zeile vorbe‑stimmten Rangs zu zählen, wobei ein Ausgang dieses Zählers mit Warnmitteln (48) verbunden ist, die ausgelöst werden, wenn die Zahl der Übergänge eine vorbestimmte, programmierte Anzahl überschreitet.

2. Vorrichtung nach Anspruch 1, dadurch ge‑kennzeichnet, daß die Mittel (3) zur Detektion einer Zeile vorbestimmten Rangs Extraktions‑mittel (18) umfassen, die das genannte Vi‑deosignal über einen Eingang (4) empfangen, um daraus Zeilen‑ (SL) und Bild‑ (SI) Syn‑chronisationsimpulse zu extrahieren, wobei diese Impulse jeweils an Ausgängen (19, 21) der Extraktionsmittel zur Verfügung stehen, sowie einen Vorwärts‑ und Rückwärtszähler (23) mit programmierbarem Sollwert, der mit den Ausgängen (19, 21) der Extraktionsmittel verbunden ist, die die Zeilen‑ (SL) und Bild‑ (SI) Synchronisationsimpulse liefern, wobei der Vorwärts − und Rückwärtszähler über einen Ausgang (5) ein logisches Signal zur Auswahl der Zeile vorbestimmten Rangs liefert, wenn der vorbestimmte Zeilenrang einem programmiertem Sollwert entspricht, wobei die Zeilen − Ausschneidemittel (6) einen spannungsgeregelten Oszillator (25) umfassen, der mit dem Ausgang (19) der Extraktionsmittel (18) verbunden ist, der die Zeilen − Synchronisationsimpulse (SL) liefert, wobei dieser Oszillator über einen Ausgang (26) Zeilen − Ausschneideimpulse liefert, die mit den Zeilen − Synchronisationsimpulsen (SL) synchronisiert sind und eine zur Frequenz der Zeilen − Synchronisationsimpulse vielfache Frequenz haben, und einen programmierbaren Differentialzähler (34), der mit dem Ausgang (26) des Oszillators verbunden ist, um über einen Ausgang (35) ein logisches Zeilen − Ausschneidesignal zu liefern, wobei der Differentialzähler (34) so programmiert ist, daß die gezählten Ausschneideimpulse einer Zeitdauer entsprechen, die gleich dem genannten Ausschnitts − Zeitintervall (t2 − t1) ist, und ein logisches UND − Gatter, das mit dem Ausgang des Differntialzählers (34) und dem Ausgang (5) der Extraktionsmittel verbunden ist, um über einen Ausgang (7) das logische Signal zum Ausschneiden der Zeile vorbestimmten Ranges zu liefern.

3. Vorrichtung nach Anspruch 2, dadurch gekennzeichnet, daß die programmierbaren Übergangs − Zählmittel (15) ein logisches UND − Zählgatter umfassen, das über einen Eingang mit dem Ausgang (7) des UND − Gatters (38) der Ausschneidemittel (6) und über einen anderen Eingang mit dem Ausgang (16) der Formungsmittel verbunden ist, wobei dieses Zählgatter über einen Ausgang (44) während des genannten Ausschneide − Zeitintervalls (t2 − t1) der Zeile vorbestimmten Rangs das genannte Signal zur Übergangskennzeichnung liefert, sowie einen Vorwärts − und Rückwärtszähler (45) zur Warnung mit programmierbarem Sollwert, der über einen Ausgang (47) ein logisches Warnsignal liefert, wenn eine programmierte Anzahl von Übergängen erreicht ist.

4. Vorrichtung nach Anspruch 3, dadurch gekennzeichnet, daß der Ausgang des Vorwärts − und Rückwärtszählers (45) zur Warnung mit einem Speicher (49) zum Aufzeichnen der logischen Warnsignale ausgeführt ist, die vom Vorwärts − und Rückwärtszähler zur Warnung für aufeinanderfolgende Bilder geliefert werden können, wobei die Warnung nur dann durch ein Speicher − Ausgangssignal ausgelöst wird, wenn der Speicher eine vorbestimmte Anzahl von logischen Warnsignalen aufgezeichnet hat.

5. Vorrichtung nach Anspruch 3, dadurch gekennzeichnet, daß die Extraktionsmittel (18) über einen anderen Ausgang (22) Clamping − Impulse (SC) liefern, wobei die Vergleichsmittel (8) einen Clamping − Schaltkreis (39) umfassen, der durch einen ersten Eingang mit dem Ausgang (22) der Extraktionsmittel verbunden ist und die genannten Clamping − Impulse liefert, wobei ein zweiter Eingang des Clamping − Schaltkreises an ein Referenzpotential (V2) gelegt ist, dem im Videosignal das Referenz − Spannungsniveau der Bildfarbe Schwarz entspricht, ein dritter Eingang (9) des Clamping − Schaltkreises (39) das Videosignal empfängt, dieser Clamping − Schaltkreis über einen Ausgang (41) ein Videosignal liefert, dessen Spannungsniveau auf die Farbe Schwarz bezogen ist, sowie einen Vergleicher (42), der über einen Eingang mit dem Ausgang (41) des Clamping − Schaltkreises und über einen anderen Eingang mit der Referenzspannung (V1) verbunden ist, die im Videosignal einem Spannungsniveau entspricht, das zwischen den Spannungsniveaus entsprechend den Farben Schwarz bzw. Weiß liegt, wobei dieser Vergleicher (42) über einen Ausgang (11) das besagte, die Leuchtdichte − Übergänge kennzeichnende Signal liefert.

6. Vorrichtung nach Anspruch 5, dadurch gekennzeichnet, daß die Extraktionsmittel (18) über einen anderen Ausgang (20) Teilbild − Synchronisationsimpulse (ST) liefern, und die Vorrichtung außerdem monostabile Mittel (50) umfaßt, die mit diesem Ausgang (20) verbunden sind, um die Teilbild − Synchronisationsimpulse(ST) zu empfangen, wobei diese monostabilen Mittel über einen Ausgang (51) ein Warnungs − Auslösesignal liefern, wenn kein Teilbild − Impuls empfangen wird oder die Teilbild − Impulse ungenügende Amplituden aufweisen.

7. Vorrichtung nach Anspruch 5, dadurch gekennzeichnet, daß sie Umschaltmittel (55) als Auswertungs − Hilfsmittel umfaßt, wobei diese Mittel mit dem Ausgang der Ausschneidemittel (6) verbunden sind, um das logische Signal zum Ausschneiden der Zeile vorbestimmten Rangs zu empfangen, sowie mit dem Ausgang des Clamping − Schaltkreises (39), um das Videosignal mit auf die Farbe Schwarz bezogenem Spannungsniveau zu erhalten, und mit einem zweistelligen Umschalter, um die Umschatmittel (55) entweder mit dem Referenzpotential (V2) der Farbe Schwarz oder mit einem Referenzpotential (V3) der Farbe Weiß zu verbinden, wobei die Umschaltmittel über einen Ausgang ein Signal liefern, das auf einen Videoempfänger mit Kontrollbildschirm anwendbar ist, um für die Zeile vorbestimmten Rangs auf dem Schirm an der durch das Ausschnitts – Zeitintervall (t2 – t1) auf der Zeile begrenzten Stelle je nach Stellung des Umschalters ein Segment schwarzer oder weisser Farbe erscheinen zu lassen.

FIG. 1

EP 0 312 449 B1

FIG. 2